# FASCICULE DE BREVET EUROPEEN

(11) **EP 0 625 002 B1**
(45) Date de publication et mention de la délivrance du brevet: **27.08.1997**
(21) Numéro de dépôt: 94901997.0
(22) Date de dépôt: 07.12.1993
(51) Int. Cl.: A01D 82/00

(54) **ROULEAU DE CONDITIONNEMENT DE FOURRAGE, DISPOSITIF ET FAUCHEUSE-CONDITIONNEUSE UTILISANT DE TELS ROULEAUX**
FURAGE-KONDITIONIERUNGSWALZE UND MÄH- UND KONDITIONIEREINRICHTUNG MIT SOLCHEN WALZEN
FODDER CONDITIONING ROLL, DEVICE AND MOWER CONDITIONER USING SUCH ROLLS

(30) Priorité: 07.12.1992 IT MN920034
(43) Date de publication de la demande: 23.11.1994
(73) Titulaire: KUHN S.A., F-67700 Saverne (FR)
(72) Inventeur: GEMELLI, Villelmo, I-46100 Mantova (IT)
(86) Numéro de dépôt international: FR9301205
(87) Numéro de publication internationale: WO9413128

(56) Documents cités:
- DE-A- 1 582 410
- DE-A- 2 055 244
- FR-A- 1 297 043
- FR-A- 1 520 206
- US-A- 3 014 324
- US-A- 3 890 770
- US-A- 4 127 979
- US-A- 4 445 313

## Description

La présente invention concerne un rouleau de conditionnement de fourrage destiné à équiper un dispositif de conditionnement de fourrage par pliage comprenant deux rouleaux au moins sensiblement parallèles et tournant chacun autour de son axe longitudinal, de sorte à faire passer entre eux le fourrage à conditionner, les saillies de l'un des rouleaux engrénant avec les saillies de l'autre rouleau.

Il est connu de faire passer les plantes fourragères entre deux rouleaux de conditionnement pour plier les tiges desdites plantes afin d'accélérer l'élimination de l'eau qui y est contenue. A cet effet, lesdits rouleaux présentent des nervures généralement hélicoïdales qui engrènent lors de la rotation des rouleaux et qui sont destinées à provoquer des lésions sur la tige des plantes par lesquelles l'eau pourra s'évaporer plus rapidement, alors que les feuilles desdites plantes fourragères demeurent intactes lors du passage entre les rouleaux.

Un inconvénient de ces rouleaux connus réside dans le fait que les tiges des plantes fourragères à conditionner peuvent pénétrer entre les deux rouleaux suivant des directions proches de celle de l'hélice formée par les nervures. De ce fait, lesdites tiges subissent très peu de pliages, voire ne subissent aucun pliage et passent pratiquement indemnes ou indemnes au travers des rouleaux.

Cet inconvénient est d'ailleurs très sensible avec les faucheuses-conditionneuses à disques, lesquels disques alimentent les rouleaux de conditionnement de manière relativement désordonnée.

On a déjà tenté de résoudre ce problème.

Une solution est décrite dans le document DE-A-20 55 244 qui montre les caractéristiques du préambule de la revendication 1. Le rouleau de conditionnement représenté sur les figures 3 et 4 de ce document comporte un noyau cylindre et quatre groupes de saillies régulièrement espacés le long de la périphérie du rouleau. Chaque saillie présente au moins sensiblement la forme d'un polyèdre de section au moins sensiblement en quadrilatère et plus précisément en losange avec des côtés inclinés par rapport à l'axe longitudinal du rouleau. Chaque groupe de saillies se développe suivant une génératrice le long du noyau cylindrique. Dans chaque groupe, les saillies sont séparées l'une de l'autre par un espace et les côtés inclinés de chaque saillie s'étendent dans le prolongement des côtés inclinés des saillies adjacentes.

Si cette configuration améliore quelque peu le conditionnement, il convient cependant de faire observer que les tiges qui se présentent au droit des espaces entre les différentes saillies, ne subissent également aucun pliage.

Il y a même de fortes chances que les tiges qui ont pénétré dans les espaces entre les saillies, ne puissent plus s'en échapper, ce qui entraînera inévitablement un bourrage non acceptable des rouleaux.

Du reste, l'engrènement de ces rouleaux connus ne paraît pas pouvoir se faire dans de bonnes conditions.

Le but de la présente invention consiste à résoudre ce problème.

Ce but a été atteint de manière tout à fait étonnante sur un rouleau de conditionnement de fourrage comprenant un noyau et des groupes de saillies se développant le long du rouleau, chaque saillie présentant au moins sensiblement la forme d'un polyèdre avec des côtés inclinés par rapport à l'axe longitudinal du rouleau, ledit rouleau étant destiné à équiper un dispositif de conditionnement de fourrage par pliage, comprenant deux rouleaux au moins sensiblement parallèles et tournant chacun autour de son axe longitudinal, de sorte à faire passer entre eux le fourrage à conditionner, les saillies de l'un des rouleaux engrénant avec les saillies de l'autre rouleau, grâce au fait que chaque saillie d'un groupe de saillies est liée par une de ses arêtes à une arête correspondante d'une saillie adjacente du même groupe de saillies au moyen d'une ramification à section réduite, de sorte que toutes les saillies et les ramifications d'un même groupe de saillies forment une nervure se développant de manière continue le long du rouleau.

Grâce à cette caractéristique, on obtient un nombre important de pliages sur chaque tige quelle que soit la direction suivant laquelle celle-ci pénètre entre les deux rouleaux et on élimine tout risque de bourrage des rouleaux par accrochage des tiges.

Selon une caractéristique supplémentaire de l'invention, chaque saillie présente au moins sensiblement la forme d'un polyèdre de section au moins sensiblement en quadrilatère.

Avantageusement, chaque saillie présente au moins sensiblement la forme d'un prisme.

Selon une autre caractéristique supplémentaire de l'invention, un côté incliné d'une saillie d'une nervure est au moins sensiblement dans le prolongement d'un côté incliné d'une saillie adjacente de la même nervure ou légèrement décalé et au moins sensiblement parallèle à celui-ci.

Selon une autre caractéristique supplémentaire de l'invention, une diagonale des saillies s'étend au moins sensiblement dans un plan orthogonal à l'axe longitudinal du rouleau.

Avantageusement, les diagonales des saillies correspondantes des nervures d'un rouleau s'étendent au moins sensiblement dans le même plan orthogonal à l'axe longitudinal du rouleau.

Avantageusement également, des diagonales des saillies s'étendant dans des plans orthogonaux à l'axe longitudinal du rouleau ont au moins sensiblement la même longueur.

Selon une autre caractéristique supplémentaire de l'invention, les arêtes libres de chaque saillie présentent un chanfrein. Avantageusement, ce chanfrein est arrondi.

Selon une autre caractéristique supplémentaire de l'invention, les ramifications ont une forme semblable et complémentaire de celle des arêtes libres des saillies.

Selon une autre caractéristique supplémentaire de l'invention, le rapport pleins-vides de l'une des sections extrêmes du rouleau est au moins sensiblement égal au rapport vides-pleins de l'autre section extrême du rouleau.

Selon une autre caractéristique supplémentaire de l'invention, chaque nervure se développe le long du rouleau en s'enroulant au moins partiellement autour du noyau.

Avantageusement, les lignes médianes d'un certain nombre de saillies adjacentes d'une nervure passant par les ramifications, forment au moins sensiblement une hélice.

Selon une importante caractéristique supplémentaire de l'invention, chaque nervure se développe le long du rouleau suivant une courbe ondulée.

Avantageusement, les ondulations de la courbe ondulée formée par les lignes médianes des saillies d'une nervure passant par les ramifications, sont au moins sensiblement des portions d'hélice.

Préférentiellement, la ligne médiane d'une saillie se trouvant au sommet d'une ondulation est formée par au moins sensiblement une portion d'hélice et au moins sensiblement une portion de génératrice au moins sensiblement parallèle à l'axe longitudinal du rouleau.

Préférentiellement également, la courbe ondulée est au moins sensiblement symétrique par rapport à un plan médian orthogonal à l'axe longitudinal du rouleau, et le rapport pleins-vides de l'une des sections extrêmes du rouleau est au moins sensiblement égal au rapport vides-pleins de l'autre section extrême du rouleau. On peut ainsi réaliser les deux rouleaux destinés à équiper un dispositif de conditionnement de fourrage avec le même moule tout en assurant un engrènement continu.

Selon une autre caractéristique supplémentaire de l'invention, le rouleau est constitué d'une succession de modules identiques et le rapport pleins-vides de l'une des sections extrêmes d'un module est au moins sensiblement égal au rapport vides-pleins de l'autre section extrême du module.

Selon une autre caractéristique supplémentaire de l'invention, la portion de la courbe ondulée de chaque nervure d'un module est au moins sensiblement symétrique par rapport à un plan médian orthogonal à l'axe longitudinal du module.

Selon une autre caractéristique supplémentaire de l'invention, l'une des sections extrêmes du module est prévue au droit de la diagonale d'une saillie s'étendant au moins sensiblement dans un plan orthogonal à l'axe longitudinal du module et l'autre section extrême du module est prévue au droit d'une ramification.

Selon une autre caractéristique supplémentaire de l'invention, le noyau est au moins sensiblement cylindrique.

L'invention concerne également un dispositif de conditionnement de fourrage par pliage comprenant deux rouleaux au moins sensiblement parallèles et tournant chacun autour de son axe longitudinal, de sorte à faire passer entre eux le fourrage à conditionner, les saillies de l'un des rouleaux engrénant avec les saillies de l'autre rouleau, lequel dispositif est caractérisé par le fait que les rouleaux sont des rouleaux selon l'invention.

Dans un tel dispositif de conditionnement, il sera avantageusement prévu que les jeux entre la nervure de l'un des rouleaux et les nervures correspondantes de l'autre rouleau sont maximaux au droit des ramifications.

L'invention concerne enfin également une faucheuse-conditionneuse comportant un dispositif de fauche et un dispositif de conditionnement du fourrage coupé par le dispositif de fauche, laquelle faucheuse-conditionneuse comporte un dispositif de conditionnement selon l'invention.

L'invention sera bien comprise grâce à la description suivante d'un exemple non limitatif de réalisation, description faite en référence au dessin annexé sur lequel :
- la figure 1 montre une vue de devant d'une faucheuse-conditionneuse munie d'un dispositif de conditionnement de fourrage par pliage comprenant deux rouleaux de conditionnement de fourrage selon l'invention ;
- la figure 2 montre un module d'un rouleau de conditionnement de fourrage selon l'invention ;

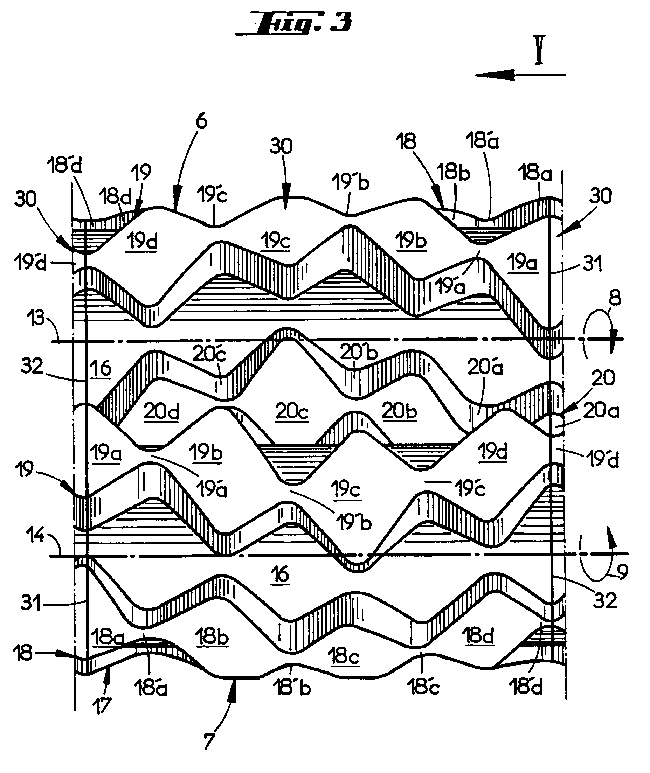

- la figure 3 montre deux modules selon la figure 2 en position d'engrènement ;
- la figure 4 montre une développée d'une nervure d'un module ;
- la figure 5 montre une vue suivant la flèche V définie sur la figure 3.

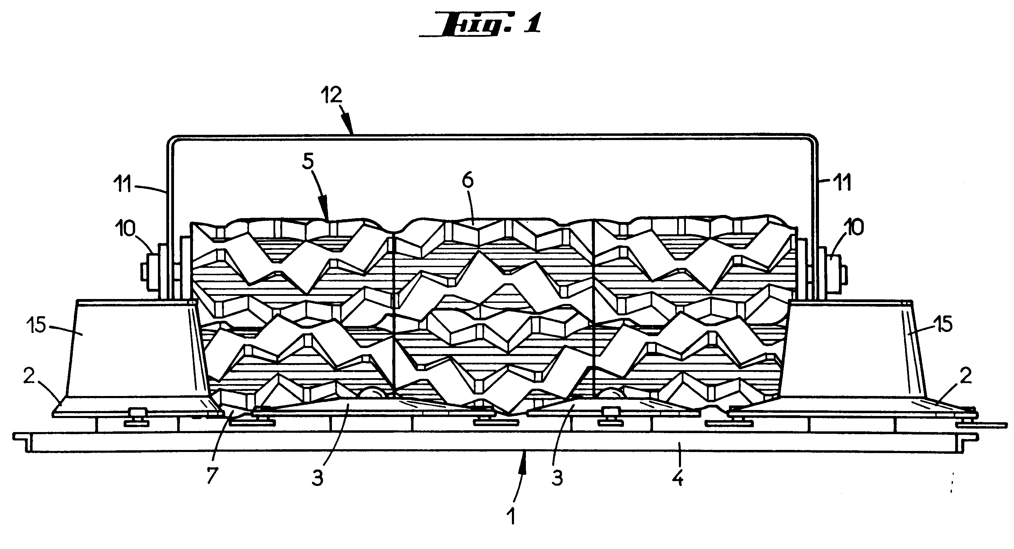

Sur la figure 1 est représentée une faucheuse-conditionneuse comportant un dispositif de fauche (1) muni de manière non limitative de quatre organes de coupe (2 ; 3). Dans l'exemple représenté, les organes de coupe (2 ; 3) sont guidés en rotation à la face supérieure d'un carter (4) et tournent autour d'axes dirigés vers le haut. Ces organes de coupe (2 ; 3) s'étendent transversalement à la direction de travail.

Derrière le dispositif de fauche (1) s'étend un dispositif (5) de conditionnement de fourrage par pliage. Ce dispositif (5) de conditionnement de fourrage comporte deux rouleaux (6 ; 7) de conditionnement de fourrage au moins sensiblement parallèles et tournant en sens inverses suivant les flèches (8 ; 9), de sorte à ce que le fourrage coupé par les organes de coupe (2 ; 3) passe entre les rouleaux (6 ; 7). Ces rouleaux (6 ; 7) sont, de manière connue, guidés en rotation dans des paliers (10) implantés sur des parois latérales (11) d'un caisson (12). Ces parois latérales (11) s'étendent au moins sensiblement verticalement et au moins sensiblement suivant la direction de travail, c'est-à-dire, dans l'exemple représenté, au moins sensiblement orthogonalement à l'axe longitudinal (13 ; 14) des rouleaux (6 ; 7). On voit également sur la figure 1, que chaque paroi latérale (11) s'étend derrière un rotor (15) surmontant l'organe de coupe (2) correspondant qui s'étend à chaque extrémité du dispositif de fauche (1).

Chaque rouleau (6 ; 7) comprend un noyau (16) au moins sensiblement cylindrique, et des nervures (17 ; 18 ; 19 ; 20). Chaque nervure (17 ; 18 ; 19 ; 20) est constituée par un groupe de saillies (17a, 17b, 17c, 17d ; 18a, 18b, 18c, 18d ; 19a, 19b, 19c, 19d ; 20a, 20b, 20c, 20d) liées entre elles par des ramifications (17'a, 17'b, 17'c, 17'd ; 18'a, 18'b, 18'c, 18'd ; 19'a, 19'b, 19'c, 19'd ; 20'a, 20'b, 20'c, 20'd) à section réduite. Chaque nervure ainsi formée se développe de manière continue le long du rouleau respectif (elle peut bien entendu comporter un nombre de saillies différent de celui de l'exemple représenté).

Chaque saillie (17a, 17b, 17c, 17d ; 18a, 18b, 18c, 18d ; 19a, 19b, 19c, 19d ; 20a, 20b, 20c, 20d) présente au moins sensiblement la forme d'un polyèdre de section au moins sensiblement en quadrilatère avec des côtés (α, β, δ, ε) inclinés par rapport à l'axe longitudinal (13 ; 14) du rouleau (6 ; 7) correspondant. Cette forme est sensiblement celle d'un polyèdre car les deux bases présentent une certaine courbure. Dans l'exemple représenté, lesdites saillies (17a, 17b, 17c, 17d ; 18a, 18b, 18c, 18d ; 19a, 19b, 19c, 19d ; 20a, 20b, 20c, 20d) ont même sensiblement la forme d'un prisme ; la base au niveau du noyau (16) étant quelque peu plus petite que la base extérieure.

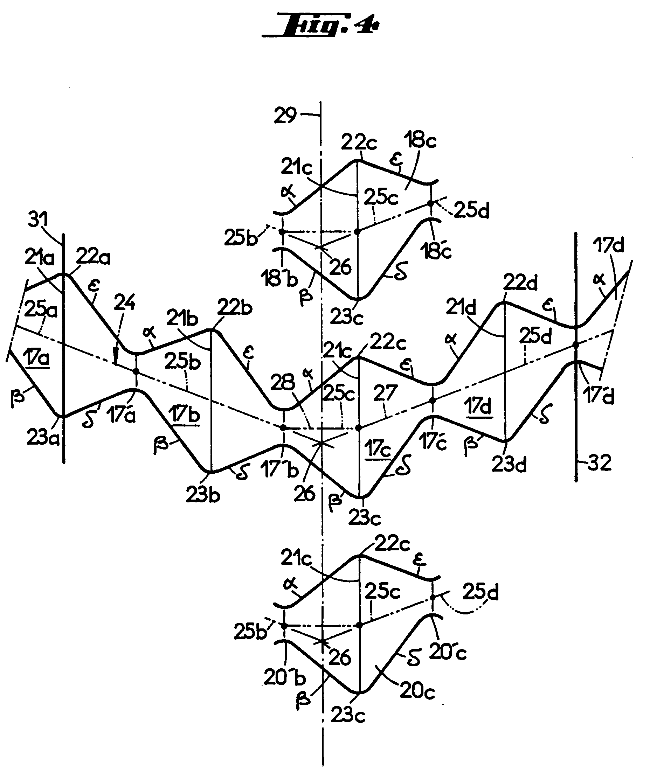

Chaque saillie (17a, 17b, 17c, 17d ; 18a, 18b, 18c, 18d ; 19a, 19b, 19c, 19d ; 20a, 20b, 20c, 20d) est liée au niveau de son arête formée par les côtés inclinés (α, β), respectivement (δ, ε), à l'arête formée par les côtés inclinés (δ, ε), respectivement (α, β), d'une saillie adjacente au moyen de la ramification (17'a, 17'b, 17'c, 17'd ; 18'a, 18'b, 18'c, 18'd ; 19'a, 19'b, 19'c, 19'd ; 20'a, 20'b, 20'c, 20'd) correspondante. Du reste, un côté incliné (α, β, δ, ε) d'une saillie (17a, 17b, 17c, 17d ; 18a, 18b, 18c, 18d ; 19a, 19b, 19c, 19d ; 20a, 20b, 20c, 20d) d'une nervure (17 ; 18 ; 19 ; 20) s'étend au moins sensiblement dans le prolongement d'un côté incliné (δ, ε, α, β) d'une saillie adjacente de la même nervure ou est légèrement décalé et au moins sensiblement parallèle à celui-ci (cf. figure 4). Il apparaît par ailleurs que la diagonale (21a ; 21b ; 21c ; 21d) liant l'arête libre (22a ; 22b ; 22c ; 22d) d'une saillie (17a, 17b, 17c, 17d ; 18a, 18b, 18c, 18d ; 19a, 19b, 19c, 19d ; 20a, 20b, 20c, 20d) à l'arête libre (23a ; 23b ; 23c; 23d) de ladite saillie s'étend au moins sensiblement dans un plan orthogonal à l'axe longitudinal (13 ; 14) du rouleau correspondant (6 ; 7). Du reste, les diagonales (21a ; 21b ; 21c ; 21d) correspondantes des saillies (17a, 17b, 17c, 17d ; 18a, 18b, 18c, 18d ; 19a, 19b, 19c, 19d ; 20a, 20b, 20c, 20d) des nervures (17 ; 18 ; 19 ; 20) d'un rouleau (6 ; 7) s'étendent au moins sensiblement dans le même plan orthogonal à l'axe longitudinal (13 ; 14) du rouleau (6 ; 7). Il en est donc de même des ramifications (17'a, 17'b, 17'c, 17'd ; 18'a, 18'b, 18'c, 18'd ; 19'a, 19'b, 19'c, 19'd ; 20'a, 20'b, 20'c, 20'd). Par ailleurs, les diagonales (21a ; 21b ; 21c ; 21d) des différentes saillies (17a, 17b, 17c, 17d ; 18a, 18b, 18c, 18d ; 19a, 19b, 19c, 19d ; 20a, 20b, 20c, 20d) ont au moins sensiblement la même longueur.

Il apparaît également que les arêtes libres (22a, 23a ; 22b, 23b ; 22c, 23c ; 22d, 23d) des saillies (17a, 17b, 17c, 17d ; 18a, 18b, 18c, 18d ; 19a, 19b, 19c, 19d ; 20a, 20b, 20c, 20d) présentent un chanfrein constitué dans l'exemple représenté par un arrondi. Les ramifications (17'a, 17'b, 17'c, 17'd ; 18'a, 18'b, 18'c, 18'd ; 19'a, 19'b, 19'c, 19'd ; 20'a, 20'b, 20'c, 20'd), quant à elles, ont une forme semblable et complémentaire de celle desdites arêtes libres (22a, 23a ; 22b, 23b ; 22c, 23c ; 22d, 23d), c'est-à-dire que dans l'exemple représenté, les ramifications (17'a, 17'b, 17'c, 17'd ; 18'a, 18'b, 18'c, 18'd ; 19'a 19'b, 19'c, 19'd ; 20'a, 20'b, 20'c, 20'd) présentent également un arrondi.

Chaque nervure (17 ; 18 ; 19 ; 20) se développe le long du rouleau (6 ; 7) suivant une courbe ondulée (24) formée par les ligues médianes (25a, 25b, 25c, 25d) des saillies (17a, 17b, 17c, 17d ; 18a, 18b, 18c, 18d ; 19a, 19b, 19c, 19d ; 20a, 20b, 20c, 20d). Les lignes médianes (25a, 25b, 25d) sont au moins sensiblement des portions d'hélice. La ligne médiane (25c) de la saillie (17c ; 18c ; 19c ; 20c) se trouvant au sommet (26) d'une ondulation, est formée par au moins sensiblement une portion d'hélice (27) et au moins sensiblement une portion de génératrice (28) au moins sensiblement parallèle à l'axe longitudinal (13 ; 14) du rouleau (6 ; 7). La portion d'hélice (27) est du reste au moins sensiblement la continuité de la ligne médiane (25d).

Sur la figure 4, on voit par ailleurs qu'une ondulation est au moins sensiblement symétrique par rapport à un plan médian (29) passant par le sommet (26) et orthogonal à l'axe longitudinal (13 ; 14) du rouleau (6 ; 7).

Dans l'exemple représenté, les rouleaux (6 ; 7) sont formés chacun d'une succession de modules (30) identiques. Chaque module (30) comporte deux sections extrêmes (31, 32) : la section extrême (31) s'étend au droit des diagonales (21a) des saillies (17a ; 18a ; 19a ; 20a) et la section extrême (32) s'étend au droit des ramifications (17'd ; 18'd ; 19'd ; 20'd). Sur la figure 5, on voit que la portion de la section extrême (31) s'étendant au-delà du noyau (16), comporte des pleins (33) formés par la matière des saillies (17a ; 18a ; 19a ; 20a) et entrecoupés par des vides (34). La portion de la section extrême (32) s'étendant au-delà du noyau (16), comporte, quant à elle, des pleins (35) formés par la matière des ramifications (17'd ; 18'd ; 19'd ; 20'd) et entrecoupés par des vides (36). La configuration est telle que le rapport pleins (33)-vides (34) de la section extrême (31) est au moins sensiblement égal au rapport vides (36)-pleins (35) de la section extrême (32), exception faite des jeux qui existent entre les pleins (33 ; 35) et les vides (34 ; 36).

Grâce à cette égalité entre ces rapports et au fait que les ondulations le long desquelles se développent les nervures (17 ; 18 ; 19 ; 20) correspondantes, sont au moins sensiblement symétriques par rapport au plan médian (29) passant par les sommets (26) des différentes ondulations, les différents modules (30) qui sont identiques, peuvent être utilisés pour réaliser les deux rouleaux (6 ; 7) contrarotatifs tout en permettant aux nervures (17 ; 18 ; 19 ; 20) du rouleau (6) d'engréner avec les nervures (17 ; 18 ; 19 ; 20) du rouleau (7). On obtient du reste un effort d'entraînement relativement uniforme.

Du reste, les saillies (17a, 17b, 17c, 17d ; 18a, 18b, 18c, 18d ; 19a, 19b, 19c, 19d ; 20a, 20b, 20c, 20d) et les ramifications (17'a, 17'b, 17'c, 17'd ; 18'a, 18'b, 18'c, 18'd ; 19'a, 19'b, 19'c, 19'd ; 20'a, 20'b, 20'c, 20'd) des différentes nervures (17 ; 18 ; 19 ; 20) et les espaces entre deux nervures (17 ; 18 ; 19 ; 20) consécutives sont dimensionnés de telle sorte que les jeux entre une nervure (17 ; 18 ; 19 ; 20) de l'un (6) des rouleaux et les deux nervures (17 ; 18 ; 19 ; 20) correspondantes de l'autre rouleau (7) soient maximaux au droit des ramifications (17'a, 17'b, 17'c, 17'd ; 18'a, 18'b, 18'c, 18'd ; 19'a, 19'b, 19'c, 19'd ; 20'a, 20'b, 20'c, 20'd). Il est d'ailleurs important que le jeu au droit d'une ramification (17'a, 17'b, 17'c, 17'd ; 18'a, 18'b, 18'c, 18'd ; 19'a, 19'b, 19'c, 19'd ; 20'a, 20'b, 20'c, 20'd) soit plutôt ample pour éviter le sectionnement des tiges qui passent à cet endroit.

Au travail, les organes de coupe (2 ; 3) du dispositif de fauche (1) de la faucheuse-conditionneuse sont entraînés en rotation d'une manière connue. En déplaçant la faucheuse-conditionneuse, lesdits organes de coupe (2 ; 3) coupent le fourrage qui se présente devant eux, et projettent le fourrage coupé vers l'arrière. Celui-ci est alors happé par les deux rouleaux de conditionnement (6 ; 7) qui sont entraînés de façon contrarotative d'une manière connue (mécaniquement, hydrauliquement...). Les tiges de fourrage qui passent entre les deux rouleaux sont pliées et on comprendra que la distance maximale entre deux plis consécutifs est au moins sensiblement égale à la longueur des diagonales (21a ; 21b ; 21c ; 21d) des saillies (17a, 17b, 17c, 17d ; 18a, 18b, 18c, 18d ; 19a, 19b, 19c, 19d ; 20a, 20b, 20c, 20d), tandis que la distance minimale entre deux plis consécutifs sera obtenue au niveau des ramifications (17'a, 17'b, 17'c, 17'd ; 18'a, 18'b, 18'c, 18'd ; 19'a, 19'b, 19'c, 19'd ; 20'a, 20'b, 20'c, 20'd).

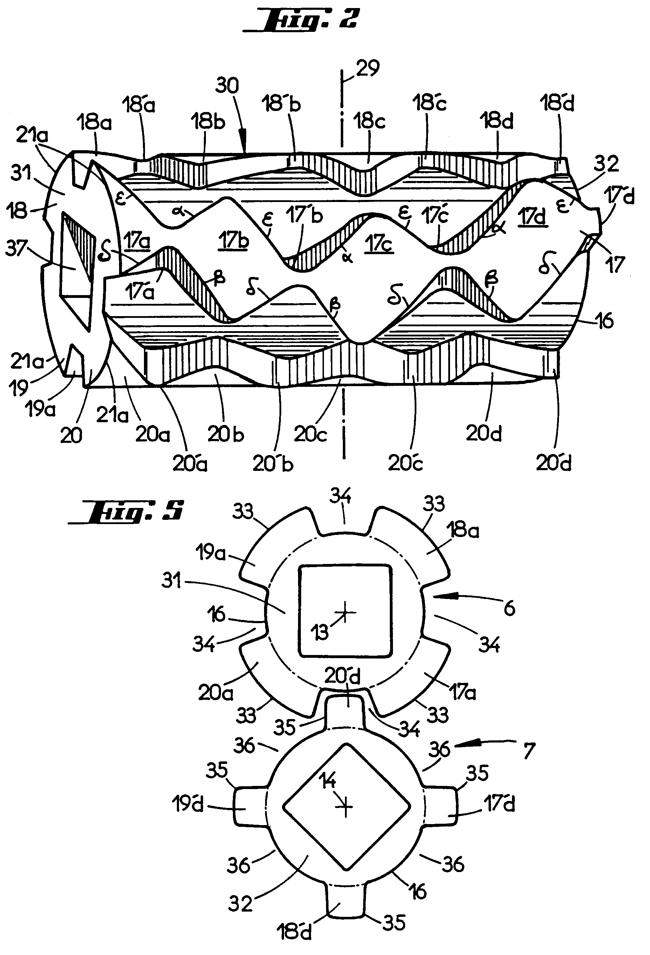

Sur la figure 2, il apparaît que chaque module (30) comporte un trou central (37) centré sur l'axe longitudinal du module (30) et de section non circulaire (carrée dans l'exemple représentée). Ce trou central (37) s'étend de part en part de telle sorte que tous les modules (30) d'un rouleau (6 ; 7) puissent être enfilés sur une barre (non représentée), généralement métallique et de section complémentaire de celle des trous centraux (37) pour empêcher la rotation des modules (30) sur la barre.

On comprendra que dans l'invention, chaque rouleau (6 ; 7) peut également être réalisé en une seule pièce.

Dans ce cas, on pourra également prévoir d'enfiler le rouleau sur une barre ou de former les nervures (17 ; 18 ; 19 ; 20) directement autour d'un tube central métallique par vulcanisation par exemple si les nervures (17 ; 18 ; 19 ; 20) doivent être en caoutchouc. D'autres matières peuvent cependant être envisagées, telles que du polyuréthane par exemple.

Dans ce cas également, les rouleaux (6 ; 7) peuvent aussi être identiques dès lors où on respecte les mêmes conditions que celles décrites pour un module (30), à savoir :
- égalité entre le rapport pleins-vides d'une section extrême et le rapport vides-pleins de l'autre section extrême,
- symétrie de la courbe ondulée (24) par rapport au plan médian orthogonal à l'axe longitudinal (13 ; 14) du rouleau (6 ; 7).
Dans l'exemple qui est décrit, chaque rouleau (6 ; 7) est muni de quatre nervures (17 ; 18 ; 19 ; 20). On comprendra toutefois que ce nombre peut être différent de quatre : cinq ou six par exemple.

On comprendra par ailleurs que la courbe ondulée (24) pourrait être remplacée par une courbe en chevron dont le sommet serait situé au niveau du plan médian orthogonal à l'axe longitudinal du rouleau.

On comprendra aussi que les organes de coupe du dispositif de fauche décrit peuvent être d'un autre type.

On comprendra même que le dispositif de conditionnement pourrait être utilisé séparément, sans être combiné avec un dispositif de fauche.

Diverses autres modifications peuvent enfin être apportées à l'exemple de réalisation décrit sans qu'on sorte pour autant du cadre général de la présente invention tel que défini dans les revendications suivantes.

## Revendications

1. Rouleau de conditionnement de fourrage comprenant un noyau (16) et des groupes de saillies (17a, 17b, 17c, 17d ; 18a, 18b, 18c, 18d ; 19a, 19b, 19c, 19d ; 20a, 20b, 20c, 20d) se développant le long du rouleau (6 ; 7), chaque saillie (17a, 17b, 17c, 17d ; 18a, 18b, 18c, 18d ; 19a, 19b, 19c, 19d ; 20a, 20b, 20c, 20d) présentant au moins sensiblement la forme d'un polyèdre avec des côtés (α, β, δ, ε) inclinés par rapport à l'axe longitudinal (13 ; 14) du rouleau (6 ; 7), ledit rouleau (6 ; 7) étant destiné à équiper un dispositif (5) de conditionnement de fourrage par pliage, comprenant deux rouleaux (6 ; 7) au moins sensiblement parallèles et tournant chacun autour de son axe longitudinal (13 ; 14), de sorte à faire passer entre eux le fourrage à conditionner, les saillies (17a, 17b, 17c, 17d ; 18a, 18b, 18c, 18d ; 19a, 19b, 19c, 19d ; 20a, 20b, 20c, 20d) de l'un (6) des rouleaux (6 ; 7) engrénant avec les saillies (17a, 17b, 17c, 17d ; 18a, 18b, 18c, 18d ; 19a, 19b, 19c, 19d ; 20a, 20b, 20c, 20d) de l'autre rouleau (7), ***caractérisé en ce*** que chaque saillie (17a, 17b, 17c, 17d ; 18a, 18b, 18c, 18d ; 19a, 19b, 19c, 19d ; 20a, 20b, 20c, 20d) d'un groupe de saillies (17a, 17b, 17c, 17d ; 18a, 18b, 18c, 18d ; 19a, 19b, 19c, 19d ; 20a, 20b, 20c, 20d) est liée par une de ses arêtes à une arête correspondante d'une saillie (17a, 17b, 17c, 17d ; 18a, 18b, 18c, 18d ; 19a, 19b, 19c, 19d ; 20a, 20b, 20c, 20d) adjacente du même groupe de saillies (17a, 17b, 17c, 17d ; 18a, 18b, 18c, 18d ; 19a, 19b, 19c, 19d ; 20a, 20b, 20c, 20d) au moyen d'une ramification (17'a, 17'b, 17'c, 17'd ; 18'a, 18'b, 18'c, 18'd ; 19'a, 19'b, 19'c, 19'd ; 20'a, 20'b, 20'c, 20'd) à section réduite, de sorte que toutes les saillies (17a, 17b, 17c, 17d ; 18a, 18b, 18c, 18d ; 19a, 19b, 19c, 19d ; 20a, 20b, 20c, 20d) et les ramifications (17'a, 17'b, 17'c, 17'd ; 18'a, 18'b, 18'c, 18'd ; 19'a, 19'b, 19'c, 19'd ; 20'a, 20'b, 20'c, 20'd) d'un même groupe de saillies (17a, 17b, 17c, 17d ; 18a, 18b, 18c, 18d ; 19a, 19b, 19c, 19d ; 20a, 20b, 20c, 20d) forment une nervure (17 ; 18 ; 19 ; 20) se développant de manière continue le long du rouleau (6 ; 7).

2. Rouleau de conditionnement de fourrage selon la revendication 1, ***caractérisé en ce*** que chaque saillie (17a, 17b, 17c, 17d ; 18a, 18b, 18c, 18d ; 19a, 19b, 19c, 19d ; 20a, 20b, 20c, 20d) présente au moins sensiblement la forme d'un polyèdre de section au moins sensiblement en quadrilatère.

3. Rouleau de conditionnement de fourrage selon la revendication 1 ou 2, ***caractérisé en ce*** que chaque saillie (17a, 17b, 17c, 17d ; 18a, 18b, 18c, 18d ; 19a, 19b, 19c, 19d ; 20a, 20b, 20c, 20d) présente au moins sensiblement la forme d'un prisme.

4. Rouleau de conditionnement de fourrage selon l'une quelconque des revendications 1 à 3, ***caractérisé en ce*** qu'un côté incliné (α, β, δ, ε) d'une saillie (17a, 17b, 17c, 17d ; 18a, 18b, 18c, 18d ; 19a, 19b, 19c, 19d ; 20a, 20b, 20c, 20d) d'une nervure (17 ; 18 ; 19 ; 20) est au moins sensiblement dans le prolongement d'un côté incliné (α, β, δ, ε) d'une saillie (17a, 17b, 17c, 17d ; 18a, 18b, 18c, 18d ; 19a, 19b, 19c, 19d ; 20a, 20b, 20c, 20d) adjacente de la même nervure (17 ; 18 ; 19 ; 20) ou légèrement décalé et au moins sensiblement parallèle à celui-ci.

5. Rouleau de conditionnement de fourrage selon l'une quelconque des revendications 1 à 4, ***caractérisé en ce*** qu'une diagonale (21a, 21b, 21c, 21d) des saillies (17a, 17b, 17c, 17d ; 18a, 18b, 18c, 18d ; 19a, 19b, 19c, 19d ; 20a, 20b, 20c, 20d) s'étend au moins sensiblement dans un plan orthogonal à l'axe longitudinal (13 ; 14) du rouleau (6 ; 7).

6. Rouleau de conditionnement de fourrage selon la revendication 5, ***caractérisé en ce*** que les diagonales (21a, 21b, 21c, 21d) des saillies (17a, 17b, 17c, 17d ; 18a, 18b, 18c, 18d ; 19a, 19b, 19c, 19d ; 20a, 20b, 20c, 20d) correspondantes des nervures (17 ; 18 ; 19 ; 20) d'un rouleau (6 ; 7) s'étendent au moins sensiblement dans le même plan orthogonal à l'axe longitudinal (13 ; 14) du rouleau (6 ; 7).

7. Rouleau de conditionnement de fourrage selon la revendication 5 ou 6, ***caractérisé en ce*** que les diagonales (21a, 21b, 21c, 21d) des saillies (17a, 17b, 17c, 17d ; 18a, 18b, 18c, 18d ; 19a, 19b, 19c, 19d ; 20a, 20b, 20c, 20d) s'étendant dans des plans orthogonaux à l'axe longitudinal (13 ; 14) du rouleau (6 ; 7) ont au moins sensiblement la même longueur.

8. Rouleau de conditionnement de fourrage selon l'une quelconque des revendications 1 à 7, ***caractérisé en ce*** que les arêtes libres (22a, 23a, 22b, 23b, 22c, 23c, 22d, 23d) de chaque saillie (17a, 17b, 17c, 17d ; 18a, 18b, 18c, 18d ; 19a, 19b, 19c, 19d ; 20a, 20b, 20c, 20d) présentent un chanfrein.

9. Rouleau de conditionnement de fourrage selon la revendication 8, ***caractérisé en ce*** que le chanfrein est arrondi.

10. Rouleau de conditionnement de fourrage selon l'une quelconque des revendications 1 à 9, ***caractérisé en ce*** que les ramifications (17'a, 17'b, 17'c, 17'd ; 18'a, 18'b, 18'c, 18'd ; 19'a, 19'b, 19'c, 19'd ; 20'a, 20'b, 20'c, 20'd) ont une forme semblable et complémentaire de celle des arêtes libres (22a, 23a, 22b, 23b, 22c, 23c, 22d, 23d) des saillies (17a, 17b, 17c, 17d ; 18a, 18b, 18c, 18d ; 19a, 19b, 19c, 19d ; 20a, 20b, 20c, 20d).

11. Rouleau de conditionnement de fourrage selon l'une quelconque des revendications 1 à 10, ***caractérisé en ce*** que le rapport pleins (33)-vides (34) de l'une (31) des sections extrêmes (31, 32) du rouleau (6 ; 7) est au moins sensiblement égal au rapport vides (36)-pleins (35) de l'autre section extrême (32) du rouleau (6 ; 7).

12. Rouleau de conditionnement de fourrage selon l'une quelconque des revendications 1 à 11, ***caractérisé en ce*** que chaque nervure (17 ; 18 ; 19 ; 20) se développe le long du rouleau (6 ; 7) en s'enroulant au moins partiellement autour du noyau (16).

13. Rouleau de conditionnement de fourrage selon la revendication 12, ***caractérisé en ce*** que les lignes médianes (25a, 25b, 25c, 25d) d'un certain nombre de saillies (17a, 17b, 17c, 17d ; 18a, 18b, 18c, 18d ; 19a, 19b, 19c, 19d ; 20a, 20b, 20c, 20d) adjacentes d'une nervure (17 ; 18 ; 19 ; 20) passant par les ramifications (17'a, 17'b, 17'c, 17'd ; 18'a, 18'b, 18'c, 18'd ; 19'a, 19'b, 19'c, 19'd ; 20'a, 20'b, 20'c, 20'd), forment au moins sensiblement une hélice (27).

14. Rouleau de conditionnement de fourrage selon la revendication 12 ou 13, ***caractérisé en ce*** que chaque nervure (17 ; 18 ; 19 ; 20) se développe le long du rouleau (6 ; 7) suivant une courbe ondulée (24).

15. Rouleau de conditionnement de fourrage selon la revendication 14, ***caractérisé en ce*** que les ondulations de la courbe ondulée (24) formée par les lignes médianes (25a, 25b, 25c, 25d) des saillies (17a, 17b, 17c, 17d ; 18a, 18b, 18c, 18d ; 19a, 19b, 19c, 19d ; 20a, 20b, 20c, 20d) d'une nervure (17 ; 18 ; 19 ; 20) passant par les ramifications (17'a, 17'b, 17'c, 17'd ; 18'a, 18'b, 18'c, 18'd ; 19'a, 19'b, 19'c, 19'd ; 20'a, 20'b, 20'c, 20'd), sont au moins sensiblement des portions d'hélice (27).

16. Rouleau de conditionnement de fourrage selon la revendication 15, ***caractérisé en ce*** que la ligne médiane (25c) d'une saillie (17c ; 18c ; 19c ; 20c) se trouvant au sommet (26) d'une ondulation est formée par au moins sensiblement une portion d'hélice (27) et au moins sensiblement une portion de génératrice (28) au moins sensiblement parallèle à l'axe longitudinal (13 ; 14) du rouleau (6 ; 7).

17. Rouleau de conditionnement de fourrage selon l'une quelconque des revendications 14 à 16, ***caractérisé en ce*** que la courbe ondulée (24) est au moins sensiblement symétrique par rapport à un plan médian (29) orthogonal à l'axe longitudinal (13 ; 14) du rouleau (6 ; 7), et que le rapport pleins (33)-vides (34) de l'une (31) des sections extrêmes (31, 32) du rouleau (6 ; 7) est au moins sensiblement égal au rapport vides (36)-pleins (35) de l'autre section extrême (32) du rouleau (6 ; 7).

18. Rouleau de conditionnement de fourrage selon l'une quelconque des revendications 1 à 17, ***caractérisé en ce*** qu'il est constitué d'une succession de modules (30) identiques, et que le rapport pleins (33)-vides (34) de l'une (31) des sections extrêmes (31, 32) d'un module (30) est au moins sensiblement égal au rapport vides (36)-pleins (35) de l'autre section extrême (32) du module (30).

19. Rouleau de conditionnement de fourrage selon la revendication 18 et l'une quelconque des revendications 14 à 17, ***caractérisé en ce*** que la portion de la courbe ondulée (24) de chaque nervure (17 ; 18 ; 19 ; 20) d'un module (30) est au moins sensiblement symétrique par rapport à un plan médian (29) orthogonal à l'axe longitudinal (13 ; 14) du module (30).

20. Rouleau de conditionnement de fourrage selon la revendication 18 ou 19, ***caractérisé en ce*** que l'une (31) des sections extrêmes (31, 32) du module (30) est prévue au droit de la diagonale (21a) d'une saillie (17a ; 18a ; 19a ; 20a) s'étendant au moins sensiblement dans un plan orthogonal à l'axe longitudinal (13 ; 14) du module (30), et l'autre section extrême (32) du module (30) est prévue au droit d'une ramification (17'd ; 18'd ; 19'd ; 20'd).

21. Rouleau de conditionnement de fourrage selon l'une quelconque des revendications 1 à 20, ***caractérisé en ce*** que le noyau (16) est au moins sensiblement cylindrique.

22. Dispositif de conditionnement de fourrage par pliage comprenant deux rouleaux (6 ; 7) au moins sensiblement parallèles et tournant chacun autour de son axe longitudinal (13 ; 14), de sorte à faire passer entre eux ce fourrage a conditionner, les saillies (17a, 17b, 17c, 17d ; 18a, 18b, 18c, 18d ; 19a, 19b, 19c, 19d ; 20a, 20b, 20c, 20d) de l'un (6) des rouleaux (6 ; 7) engrénant avec les saillies (17a, 17b, 17c, 17d ; 18a, 18b, 18c, 18d ; 19a, 19b, 19c, 19d ; 20a, 20b, 20c, 20d) de l'autre rouleau (7), ***caractérisé en ce*** que les rouleaux (6 ; 7) sont des rouleaux selon l'une quelconque des revendications 1 à 21.

23. Dispositif de conditionnement de fourrage selon la revendication 22, ***caractérisé en ce*** que les jeux entre la nervure (17 ; 18 ; 19 ; 20) de l'un (6) des rouleaux (6 ; 7) et les nervures (17 ; 18 ; 19 ; 20) correspondantes de l'autre rouleau (7) sont maximaux au droit des ramifications (17'a, 17'b, 17'c, 17'd ; 18'a, 18'b, 18'c, 18'd ; 19'a, 19'b, 19'c, 19'd ; 20'a, 20'b, 20'c, 20'd).

24. Faucheuse-conditionneuse comportant un dispositif de fauche (1) et un dispositif (5) de conditionnement du fourrage coupé par le dispositif de fauche (1), ***caractérisé en ce*** que le dispositif (5) de conditionnement de fourrage est un dispositif selon la revendication 22 ou 23.

## Claims

1. Fodder conditioning roller comprising a core (16) and groups of projections (17a, 17b, 17c, 17d; 18a, 18b, 18c, 18d; 19a, 19b, 19c, 19d; 20a, 20b, 20c, 20d) arranged along the length of the roller (6; 7), each projection (17a, 17b, 17c, 17d; 18a, 18b, 18c, 18d; 19a, 19b, 19c, 19d; 20a, 20b, 20c, 20d) having at least substantially the shape of a polyhedron with sides (α, β, δ, ε) which are inclined with respect to the longitudinal axis (13; 14) of the roller (6; 7), the said roller (6; 7) being intended to equip a device (5) for conditioning fodder by bending, comprising two at least substantially parallel rollers (6; 7) each rotating about its longitudinal axis (13; 14) so as to cause the fodder to be conditioned to pass between them, the projections (17a, 17b, 17c, 17d; 18a, 18b, 18c, 18d; 19a, 19b, 19c, 19d; 20a, 20b, 20c, 20d) of one (6) of the rollers (6; 7) meshing with the projections (17a, 17b, 17c, 17d; 18a, 18b, 18c, 18d; 19a, 19b, 19c, 19d; 20a, 20b, 20c, 20d) of the other roller (7), ***characterized in*** that each projection (17a, 17b, 17c, 17d; 18a, 18b, 18c, 18d; 19a, 19b, 19c, 19d; 20a, 20b, 20c, 20d) of one group of projections (17a, 17b, 17c, 17d; 18a, 18b, 18c, 18d; 19a, 19b, 19c, 19d; 20a, 20b, 20c, 20d) is connected by one of its edges to a corresponding edge of an adjacent projection (17a, 17b, 17c, 17d; 18a, 18b, 18c, 18d; 19a, 19b, 19c, 19d; 20a, 20b, 20c, 20d) of the same group of projections (17a, 17b, 17c, 17d; 18a, 18b, 18c, 18d; 19a, 19b, 19c, 19d; 20a, 20b, 20c, 20d) by means of a branch (17'a, 17'b, 17'c, 17'd; 18'a, 18'b, 18'c, 18'd; 19'a, 19'b, 19'c, 19'd; 20'a, 20'b, 20'c, 20'd) with reduced cross-section in such a way that all of the projections (17a, 17b, 17c, 17d; 18a, 18b, 18c, 18d; 19a, 19b, 19c, 19d; 20a, 20b, 20c, 20d) and of the branches (17'a, 17'b, 17'c, 17'd; 18'a, 18'b, 18'c, 18'd; 19'a, 19'b, 19'c, 19'd; 20'a, 20'b, 20'c, 20'd) of one same group of projections (17a, 17b, 17c, 17d; 18a, 18b, 18c, 18d; 19a, 19b, 19c, 19d; 20a, 20b, 20c, 20d) form a rib (17; 18; 19; 20) which is arranged continuously along the length of the roller (6; 7).

2. Fodder conditioning roller according to Claim 1, ***characterized in*** that each projection (17a, 17b, 17c, 17d; 18a, 18b, 18c, 18d; 19a, 19b, 19c, 19d; 20a, 20b, 20c, 20d) has at least substantially the shape of a polyhedron of at least substantially quadrilateral-shaped cross-section.

3. Fodder conditioning roller according to Claim 1 or 2, ***characterized in*** that each projection (17a, 17b, 17c, 17d; 18a, 18b, 18c, 18d; 19a, 19b, 19c, 19d; 20a, 20b, 20c, 20d) has at least substantially the shape of a prism.

4. Fodder conditioning roller according to any one of Claims 1 to 3, ***characterized in*** that an inclined side (α, β, δ, ε) of a projection (17a, 17b, 17c, 17d; 18a, 18b, 18c, 18d; 19a, 19b, 19c, 19d; 20a, 20b, 20c, 20d) of a rib (17; 18; 19; 20) is at least substantially in the extension of an inclined side (α, β, δ, ε) of an adjacent projection (17a, 17b, 17c, 17d; 18a, 18b, 18c, 18d; 19a, 19b, 19c, 19d; 20a, 20b, 20c, 20d) of the same rib (17; 18; 19; 20) or slightly offset and at least substantially parallel thereto.

5. Fodder conditioning roller according to any one of Claims 1 to 4, ***characterized in*** that one diagonal (21a, 21b, 21c, 21d) of the projections (17a, 17b, 17c, 17d; 18a, 18b, 18c, 18d; 19a, 19b, 19c, 19d; 20a, 20b, 20c, 20d) extends at least substantially in a plane orthogonal to the longitudinal axis (13; 14) of the roller (6; 7).

6. Fodder conditioning roller according to Claim 5, ***characterized in*** that the diagonals (21a, 21b, 21c, 21d) of the corresponding projections (17a, 17b, 17c, 17d; 18a, 18b, 18c, 18d; 19a, 19b, 19c, 19d; 20a, 20b, 20c, 20d) of the ribs (17; 18; 19; 20) of a roller (6; 7) extend at least substantially in the same plane orthogonal to the longitudinal axis (13; 14) of the roller (6; 7).

7. Fodder conditioning roller according to Claim 5 or 6, ***characterized in*** that the diagonals (21a, 21b, 21c, 21d) of the projections (17a, 17b, 17c, 17d; 18a, 18b, 18c, 18d; 19a, 19b, 19c, 19d; 20a, 20b, 20c, 20d) extending in planes orthogonal to the longitudinal axis (13; 14) of the roller (6; 7) have at least substantially the same length.

8. Fodder conditioning roller according to any one of Claims 1 to 7, ***characterized in*** that the free edges (22a, 23a, 22b, 23b, 22c, 23c, 22d, 23d) of each projection (17a, 17b, 17c, 17d; 18a, 18b, 18c, 18d; 19a, 19b, 19c, 19d; 20a, 20b, 20c, 20d) are chamfered.

9. Fodder conditioning roller according to Claim 8, ***characterized in*** that the chamfer is rounded.

10. Fodder conditioning roller according to any one of Claims 1 to 9, ***characterized in*** that the branches (17'a, 17'b, 17'c, 17'd; 18'a, 18'b, 18'c, 18'd; 19'a, 19'b, 19'c, 19'd; 20'a, 20'b, 20'c, 20'd) have a shape which is similar to and complements that of the free edges (22a, 23a, 22b, 23b, 22c, 23c, 22d, 23d) of the projections (17a, 17b, 17c, 17d; 18a, 18b, 18c, 18d; 19a, 19b, 19c, 19d; 20a, 20b, 20c, 20d).

11. Fodder conditioning roller according to any one of Claims 1 to 10, ***characterized in*** that the solid (33)/gap (34) ratio of one (31) of the end sections (31, 32) of the roller (6; 7) is at least substantially equal to the gap (36)/solid (35) ratio of the other end section (32) of the roller (6; 7).

12. Fodder conditioning roller according to any one of Claims 1 to 11, ***characterized in*** that each rib (17; 18; 19; 20) is arranged along the length of the roller (6; 7) by being wrapped at least partially around the core (16).

13. Fodder conditioning roller according to Claim 12, ***characterized in*** that the mid-lines (25a, 25b, 25c, 25d) of a certain number of adjacent projections (17a, 17b, 17c, 17d; 18a, 18b, 18c, 18d; 19a, 19b, 19c, 19d; 20a, 20b, 20c, 20d) of a rib (17; 18; 19; 20) passing through the branches (17'a, 17'b, 17'c, 17'd; 18'a, 18'b, 18'c, 18'd; 19'a, 19'b, 19'c, 19'd; 20'a, 20'b, 20'c, 20'd) at least substantially form a helix (27).

14. Fodder conditioning roller according to Claim 12 or 13, ***characterized in*** that each rib (17; 18; 19; 20) is arranged along the length of the roller (6; 7) in a wavy curve (24).

15. Fodder conditioning roller according to Claim 14, ***characterized in*** that the waves of the wavy curve (24) formed by the mid-lines (25a, 25b, 25c, 25d) of the projections (17a, 17b, 17c, 17d; 18a, 18b, 18c, 18d; 19a, 19b, 19c, 19d; 20a, 20b, 20c, 20d) of a rib (17; 18; 19; 20) passing through the branches (17'a, 17'b, 17'c, 17'd; 18'a, 18'b, 18'c, 18'd; 19'a, 19'b, 19'c, 19'd; 20'a, 20'b, 20'c, 20'd), are at least substantially portions of a helix (27).

16. Fodder conditioning roller according to Claim 15, ***characterized in*** that the mid-line (25c) of a projection (17c; 18c; 19c; 20c) positioned at the top (26) of a wave is formed by at least substantially one portion of a helix (27) and at least substantially one portion of a generatrix (28) at least substantially parallel to the longitudinal axis (13; 14) of the roller (6; 7).

17. Fodder conditioning roller according to any one of Claims 14 to 16, ***characterized in*** that the wavy curve (24) is at least substantially symmetric with respect to a mid-plane (29) orthogonal to the longitudinal axis (13; 14) of the roller (6; 7) and that the solid (33)/gap (34) ratio of one (31) of the end sections (31, 32) of the roller (6; 7) is at least substantially equal to the gap (36)/solid (35) ratio of the other end section (32) of the roller (6; 7).

18. Fodder conditioning roller according to any one of Claims 1 to 17, ***characterized in*** that it consists of a succession of identical modules (30) and that the solid (33)/gap (34) ratio of one (31) of the end sections (31, 32) of one module (30) is at least substantially equal to the gap (36)/solid (35) ratio of the other end section (32) of the module (30).

19. Fodder conditioning roller according to Claim 18 and any one of Claims 14 to 17, ***characterized in*** that the portion of the wavy curve (24) of each rib (17; 18; 19; 20) of a module (30) is at least substantially symmetric with respect to a mid-plane (29) orthogonal to the longitudinal axis (13; 14) of the module (30).

20. Fodder conditioning roller according to Claim 18 or 19, ***characterized in*** that one (31) of the end sections (31, 32) of the module (30) is arranged at the level of the diagonal (21a) of a projection (17a; 18a; 19a; 20a) extending at least substantially in a plane orthogonal to the longitudinal axis (13; 14) of the module (30), and the other end section (32) of the module (30) is arranged at the level of a branch (17'd; 18'd; 19'd; 20'd).

21. Fodder conditioning roller according to any one of Claims 1 to 20, ***characterized in*** that the core (16) is at least substantially cylindrical.

22. Device for conditioning fodder by bending, comprising two at least substantially parallel rollers (6; 7) each rotating about its longitudinal axis (13; 14) so as to cause this fodder to be conditioned to pass between them, the projections (17a, 17b, 17c, 17d; 18a, 18b, 18c, 18d; 19a, 19b, 19c, 19d; 20a, 20b, 20c, 20d) of one (6) of the rollers (6; 7) meshing with the projections (17a, 17b, 17c, 17d; 18a, 18b, 18c, 18d; 19a, 19b, 19c, 19d; 20a, 20b, 20c, 20d) of the other roller (7), ***characterized in*** that the rollers (6; 7) are rollers according to any one of Claims 1 to 21.

23. Fodder conditioning device according to Claim 22, ***characterized in*** that the clearances between the ribs (17; 18; 19; 20) of one (6) of the rollers (6; 7) and the corresponding ribs (17; 18; 19; 20) of the other roller (7) have their maximum values at the level of the branches (17'a, 17'b, 17'c, 17'd; 18'a, 18'b, 18'c, 18'd; 19'a, 19'b, 19'c, 19'd; 20'a, 20'b, 20'c, 20'd).

24. Mower-conditioner including a mowing device (1) and a device (5) for conditioning the fodder cut by the mowing device (1), ***characterized in*** that the fodder conditioning device (5) is a device according to Claim 22 or 23.

## Patentansprüche

1. Futterkonditionierwalze, die einen Kern (16) und Gruppen von sich entlang der Walze (6; 7) erstreckenden Vorsprüngen (17a, 17b, 17c, 17d; 18a, 18b, 18c, 18d; 19a, 19b, 19c, 19d; 20a, 20b, 20c, 20d) umfaßt, wobei jeder Vorsprung (17a, 17b, 17c, 17d; 18a, 18b, 18c, 18d; 19a, 19b, 19c, 19d; 20a, 20b, 20c, 20d) zumindest im wesentlichen die Form eines Polyeders mit bezüglich der Längsachse (13; 14) der Walze (6; 7) geneigten Seiten (α, β, δ, ε) aufweist, wobei die Walze (6; 7) eine Vorrichtung (5) zum Konditionieren von Futter durch Knicken ausstatten soll, welche zwei zumindest im wesentlichen parallele Walzen (6; 7) aufweist, die sich jeweils derart um ihre Längsachse (13; 14) drehen, daß zwischen ihnen das zu konditionierende Futter hindurchgeführt wird, wobei die Vorsprünge (17a, 17b, 17c, 17d; 18a, 18b, 18c, 18d; 19a, 19b, 19c, 19d; 20a, 20b, 20c, 20d) der einen (6) der Walzen (6; 7) mit den Vorsprüngen (17a, 17b, 17c, 17d; 18a, 18b, 18c, 18d; 19a, 19b, 19c, 19d; 20a, 20b, 20c, 20d) der anderen Walze (7) ineinander greifen, ***dadurch gekennzeichnet,*** daß jeder Vorsprung (17a, 17b, 17c, 17d; 18a, 18b, 18c, 18d; 19a, 19b, 19c, 19d; 20a, 20b, 20c, 20d) einer Gruppe von Vorsprüngen (17a, 17b, 17c, 17d; 18a, 18b, 18c, 18d; 19a, 19b, 19c, 19d; 20a, 20b, 20c, 20d) mit einer seiner Kanten mittels eines Stegs (17'a, 17'b, 17'c, 17'd; 18'a, 18'b, 18'c, 18'd; 19'a, 19'b, 19'c, 19'd; 20'a, 20'b, 20'c, 20'd) verringerten Querschnitts derart mit einer dazugehörigen Kante eines benachbarten Vorsprungs (17a, 17b, 17c, 17d; 18a, 18b, 18c, 18d; 19a, 19b, 19c, 19d; 20a, 20b, 20c, 20d) der gleichen Gruppe von Vorsprüngen (17a, 17b, 17c, 17d; 18a, 18b, 18c, 18d; 19a, 19b, 19c, 19d; 20a, 20b, 20c, 20d) verbunden ist, daß alle Vorsprünge (17a, 17b, 17c, 17d; 18a, 18b, 18c, 18d; 19a, 19b, 19c, 19d; 20a, 20b, 20c, 20d) und Stege (17'a, 17'b, 17'c, 17'd; 18'a, 18'b, 18'c, 18'd; 19'a, 19'b, 19'c, 19'd; 20'a, 20'b, 20'c, 20'd) einer gleichen Gruppe von Vorsprüngen (17a, 17b, 17c, 17d; 18a, 18b, 18c, 18d; 19a, 19b, 19c, 19d; 20a, 20b, 20c, 20d) eine sich durchgehend entlang der Walze (6; 7) erstreckende Rippe (17; 18; 19; 20) bilden.

2. Futterkonditionierwalze nach Anspruch 1, ***dadurch gekennzeichnet,*** daß jeder Vorsprung (17a, 17b, 17c, 17d; 18a, 18b, 18c, 18d; 19a, 19b, 19c, 19d; 20a, 20b, 20c, 20d) zumindest im wesentlichen die Form eines Polyeders mit einem zumindest im wesentlichen viereckigen Querschnitt aufweist.

3. Futterkonditionierwalze nach Anspruch 1 oder 2, ***dadurch gekennzeichnet,*** daß jeder Vorsprung (17a, 17b, 17c, 17d; 18a, 18b, 18c, 18d; 19a, 19b, 19c, 19d; 20a, 20b, 20c, 20d) zumindest im wesentlichen die Form eines Prismas aufweist.

4. Futterkonditionierwalze nach irgend einem der Ansprüche 1 bis 3, ***dadurch gekennzeichnet,*** daß sich eine geneigte Seite (α, β, δ, ε) eines Vorsprungs (17a, 17b, 17c, 17d; 18a, 18b, 18c, 18d; 19a, 19b, 19c, 19d; 20a, 20b, 20c, 20d) einer Rippe (17; 18; 19; 20) zumindest im wesentlichen in der Verlängerung einer geneigten Seite (α, β, δ, ε) eines benachbarten Vorsprungs (17a, 17b, 17c, 17d; 18a, 18b, 18c, 18d; 19a, 19b, 19c, 19d; 20a, 20b, 20c, 20d) der gleichen Rippe (17; 18; 19; 20) oder leicht davon versetzt und zumindest im wesentlichen parallel dazu befindet.

5. Futterkonditionierwalze nach irgend einem der Ansprüche 1 bis 4, ***dadurch gekennzeichnet,*** daß eine Diagonale (21a, 21b, 21c, 21d) der Vorsprünge (17a, 17b, 17c, 17d; 18a, 18b, 18c, 18d; 19a, 19b, 19c, 19d; 20a, 20b, 20c, 20d) zumindest im wesentlichen in einer orthogonal zur Längsachse (13; 14) der Walze (6; 7) verlaufenden Ebene verläuft.

6. Futterkonditionierwalze nach Anspruch 5, ***dadurch gekennzeichnet,*** daß die Diagonalen (21a, 21b, 21c, 21d) der dazugehörigen Vorsprünge (17a, 17b, 17c, 17d; 18a, 18b, 18c, 18d; 19a, 19b, 19c, 19d; 20a, 20b, 20c, 20d) der Rippen (17; 18; 19; 20) einer Walze (6; 7) zumindest im wesentlichen in der gleichen, orthogonal zur Längsachse (13; 14) der Walze (6; 7) verlaufenden Ebene verlaufen.

7. Futterkonditionierwalze nach Anspruch 5 oder 6, ***dadurch gekennzeichnet,*** daß die sich in orthogonal zur Längsachse (13; 14) der Walze (6; 7) verlaufenden Ebenen erstreckenden Diagonalen (21a, 21b, 21c, 21d) der Vorsprünge (17a, 17b, 17c, 17d; 18a, 18b, 18c, 18d; 19a, 19b, 19c, 19d; 20a, 20b, 20c, 20d) zumindest im wesentlichen die gleiche Länge aufweisen.

8. Futterkonditionierwalze nach irgend einem der Ansprüche 1 bis 7, ***dadurch gekennzeichnet,*** daß die freien Kanten (22a, 23a, 22b, 23b, 22c, 23c, 22d, 23d) jedes Vorsprungs (17a, 17b, 17c, 17d; 18a, 18b, 18c, 18d; 19a, 19b, 19c, 19d; 20a, 20b, 20c, 20d) eine Fase aufweisen.

9. Futterkonditionierwalze nach Anspruch 8, ***dadurch gekennzeichnet,*** daß diese Fase abgerundet ist.

10. Futterkonditionierwalze nach irgend einem der Ansprüche 1 bis 9, ***dadurch gekennzeichnet,*** daß die Stege (17'a, 17'b, 17'c, 17'd; 18'a, 18'b, 18'c, 18'd; 19'a, 19'b, 19'c, 19'd; 20'a, 20'b, 20'c, 20'd) eine Form aufweisen, die der der freien Kanten (22a, 23a, 22b, 23b, 22c, 23c, 22d, 23d) der Vorsprünge (17a, 17b, 17c, 17d; 18a, 18b, 18c, 18d; 19a, 19b, 19c, 19d; 20a, 20b, 20c, 20d) ähnelt und dazu komplementär ist.

11. Futterkonditionierwalze nach irgend einem der Ansprüche 1 bis 10, ***dadurch gekennzeichnet,*** daß das Vollteile (33)-Lücken (34)-Verhältnis des einen (31) der außenliegenden Abschnitte (31, 32) der Walze (6; 7) zumindest im wesentlichen gleich dem Lücken (36)-Vollteile (33)-Verhältnis des anderen außenliegenden Abschnitts (32) der Walze (6; 7) ist.

12. Futterkonditionierwalze nach irgend einem der Ansprüche 1 bis 11, ***dadurch gekennzeichnet,*** daß sich jede Rippe (17; 18; 19; 20) entlang der Walze (6; 7) erstreckt, indem sie sich zumindest teilweise um den Kern (16) herum wickelt.

13. Futterkonditionierwalze nach Anspruch 12, ***dadurch gekennzeichnet,*** daß die durch die Stege (17'a, 17'b, 17'c, 17'd; 18'a, 18'b, 18'c, 18'd; 19'a, 19'b, 19'c, 19'd; 20'a, 20'b, 20'c, 20'd) verlaufenden Mittellinien (25a, 25b, 25c, 25d) einer bestimmten Anzahl von benachbarten Vorsprüngen (17a, 17b, 17c, 17d; 18a, 18b, 18c, 18d; 19a, 19b, 19c, 19d; 20a, 20b, 20c, 20d) einer Rippe (17; 18; 19; 20) zumindest im wesentlichen eine Schraubenlinie (27) bilden.

14. Futterkonditionierwalze nach Anspruch 12 oder 13, ***dadurch gekennzeichnet,*** daß sich jede Rippe (17; 18; 19; 20) gemäß einer wellenförmigen Kurve (24) entlang der Walze (6; 7) erstreckt.

15. Futterkonditionierwalze nach Anspruch 14, ***dadurch gekennzeichnet,*** daß es sich bei den durch die Stege (17'a, 17'b, 17'c, 17'd; 18'a, 18'b, 18'c, 18'd; 19'a, 19'b, 19'c, 19'd; 20'a, 20'b, 20'c, 20'd) verlaufenden Wellenlinien der durch die Mittellinien (25a, 25b, 25c, 25d) der Vorsprünge (17a, 17b, 17c, 17d; 18a, 18b, 18c, 18d; 19a, 19b, 19c, 19d; 20a, 20b, 20c, 20d) einer Rippe (17; 18; 19; 20) gebildeten gewellten Kurve (24) zumindest im wesentlichen um schrauben-linienförmige Teile (27) handelt.

16. Futterkonditionierwalze nach Anspruch 15, ***dadurch gekennzeichnet,*** daß die sich am Scheitel (26) einer Wellenlinie befindende Mittellinie (25c) eines Vorsprungs (17c; 18c; 19c; 20c) zumindest im wesentlichen durch einen schraubenlinienförmigen Teil (27) und zumindest im wesentlichen durch einen Mantellinienteil (28), der zumindest im wesentlichen parallel zur Längsachse (13; 14) der Walze (6; 7) verläuft, gebildet wird.

17. Futterkonditionierwalze nach irgend einem der Ansprüche 14 bis 16, ***dadurch gekennzeichnet,*** daß die wellenförmige Kurve (24) zumindest im wesentlichen symmetrisch zu einer orthogonal zur Längsachse (13; 14) der Walze (6; 7) verlaufenden mittleren Ebene (29) ist, und das Vollteile (33)-Lücken (34)-Verhältnis des einen (31) der außenliegenden Abschnitte (31, 32) der Walze (6; 7) zumindest im wesentlichen gleich dem Lücken (36)-Vollteile (35)-Verhältnis des anderen außenliegenden Abschnitts (32) der Walze (6; 7) ist.

18. Futterkonditionierwalze nach irgend einem der Ansprüche 1 bis 17, ***dadurch gekennzeichnet,*** daß sie aus einer Folge von identischen Modulen (30) besteht und das Vollteile (33)-Lücken (34)-Verhältnis des einen (31) der außenliegenden Abschnitte (31, 32) eines Moduls (30) zumindest im wesentlichen gleich dem Lücken (36)-Vollteile (35)-Verhältnis des anderen außenliegenden Abschnitts (32) des Moduls (30) ist.

19. Futterkonditionierwalze nach Anspruch 18 und irgend einem der Ansprüche 14 bis 17, ***dadurch gekennzeichnet,*** daß der Teil des wellenförmigen Kurventeils (24) jeder Rippe (17; 18; 19; 20) eines Moduls (30) zumindest im wesentlichen symmetrisch zu einer orthogonal zur Längsachse (13; 14) des Moduls (30) verlaufenden mittleren Ebene (29) ist.

20. Futterkonditionierwalze nach Anspruch 18 oder 19, ***dadurch gekennzeichnet,*** daß der eine (31) der außenliegenden Abschnitte (31, 32) des Moduls (30) im Bereich der Diagonale (21a) eines Vorsprungs (17a; 18a; 19a; 20a) vorgesehen ist, welcher zumindest im wesentlichen in einer orthogonal zur Längsachse (13; 14) des Moduls (30) verlaufenden Ebene verläuft, und der andere außenliegende Abschnitt (32) des Moduls (30) im Bereich eines Stegs (17'd; 18'd; 19'd; 20'd) vorgesehen ist.

21. Futterkonditionierwalze nach irgend einem der Ansprüche 1 bis 20, ***dadurch gekennzeichnet,*** daß der Kern (16) zumindest im wesentlichen zylindrisch ist.

22. Vorrichtung zum Konditionieren von Futter durch Knicken, die zwei zumindest im wesentlichen parallele Walzen (6; 7), die sich jeweils derart um ihre Längsachse (13; 14) drehen, daß zwischen ihnen dieses zu konditionierende Futter hindurchgeführt wird, aufweist, wobei die Vorsprünge (17a, 17b, 17c, 17d; 18a, 18b, 18c, 18d; 19a, 19b, 19c, 19d; 20a, 20b, 20c, 20d) der einen (6) der Walzen (6; 7) mit den Vorsprüngen (17a, 17b, 17c, 17d; 18a, 18b, 18c, 18d; 19a, 19b, 19c, 19d; 20a, 20b, 20c, 20d) der anderen Walze (7) ineinander greifen, ***dadurch gekennzeichnet,*** daß es sich bei den Walzen (6; 7) um Walzen nach irgend einem der Ansprüche 1 bis 21 handelt.

23. Futterkonditioniervorrichtung nach Anspruch 22, ***dadurch gekennzeichnet,*** daß das Spiel zwischen der Rippe (17; 18; 19; 20) der einen (6) der Walzen (6; 7) und den dazugehörigen Rippen (17; 18; 19; 20) der anderen Walze (7) im Bereich der Stege (17'a, 17'b, 17'c, 17'd; 18'a, 18'b, 18'c, 18'd; 19'a, 19'b, 19'c, 19'd; 20'a, 20'b, 20'c, 20'd) am größten ist.

24. Mäh-/Konditioniervorrichtung, die eine Mähvorrichtung (1) und eine Vorrichtung (5) zum Konditionieren des durch die Mähvorrichtung (1) geschnittene Futter aufweist, ***dadurch gekennzeichnet,*** daß die Konditioniervorrichtung (5) eine Vorrichtung nach Anspruch 22 oder 23 ist.
